Europäisches Patentamt

(19) European Patent Office

Office européen des brevets

(11) Publication number: **0 018 761**
**A1**

## (12) EUROPEAN PATENT APPLICATION

(21) Application number: **80301279.8**

(22) Date of filing: **21.04.80**

(51) Int. Cl.³: **A 23 C 19/076**
**//A23L1/04, A23L1/212**

(30) Priority: **23.04.79 US 32562**

(43) Date of publication of application:
**12.11.80 Bulletin 80/23**

(84) Designated Contracting States:
**BE CH DE FR GB LI NL SE**

(71) Applicant: **Lundstedt, Erik**
**9826 Marina Boulevard, Apt 1020**
**Boca Raton Florida 33433(US)**

(72) Inventor: **Lundstedt, Erik**
**9826 Marina Boulevard, Apt 1020**
**Boca Raton Florida 33433(US)**

(74) Representative: **Wilson, Joseph Martin**
**WITHERS & ROGERS 4 Dyer's Buildings Holborn**
**London EC1N 2JT(GB)**

(54) **Cottage cheese product and process of manufacture.**

(57) A cottage cheese sundae having a viscous, fruit-containing base layer and a cottage-cheese-containing upper layer. The two layers are maintained separate during the marketing of the sundae and are mixed just prior to use. The base layer is stabilized with pectin, preferably low-methoxyl pectin, and contains from about 40% to 52% total soluble solids. The upper layer is made by using a yogurt-containing dressing on soft cottage cheese curd. The pH of the mixed fruit and cottage cheese is between 4.3 and 4.6. Graininess and fruit color change which would be expected to develop after time with a mixture of fruit and cottage cheese is avoided with the invention.

EP 0 018 761 A1

-1-

COTTAGE CHEESE PRODUCT AND
PROCESS OF MANUFACTURE

The present invention relates to the manufacture and
sale of a fruit flavored cottage cheese.  Successful
varieties of fruit flavored cottage cheese with the
flavoring of strawberry, raspberry, blueberry or cherry
varieties are not on the market today for two very good
reasons.  (1) Cottage cheese contains about 80% moisture
and exhibits a very low osmolarity.  The sugar-containing
fruit exhibits a relatively high osmolarity.  When fruit
is mixed with cottage cheese, the fruit dehydrates the
cottage cheese curd by osmosis.  This osmotic dehydration
results in a grainy, tough curd.  Such a mixture of fruit
and cottage cheese is unsalable.  This effect is
especially noticeable when conventional fruit preserves
containing about 65% sugar are used.  (2) The color of the
cottage cheese mixed with sugared fruit will gradually
change to an unappetizing color.  This color change is
especially true for the red and blue fruit colors.  The
color change alone makes the cottage cheese mixed with
such fruits unsalable.  As an additional factor, cottage
cheese generally has a pH of around 5.0.  Such a pH is too
high for optimum release of fruit flavor when conventional
fruit layers are employed.

-2-

On the other hand, yogurt and ice cream do not suffer from undesired dehydration and color change because they both contain enough sugar before fruit is added to substantially reduce or eliminate osmotic damage. Graininess is therefore not produced in the dairy product and colors are stable. Moreover, in yogurt the typical pH of about 4.2 (3.9 - 4.3) provides excellent release of fruit flavor. In some fruit and yogurt combination products, the fruit component is placed in the lower portion of the container and the yogurt is placed on top of the fruit component. The consumer may then mix the two prior to eating. Fruit and yogurt combinations are satisfactory whether they are mixed prior to placement in a container or whether they are kept separate until just prior to eating.

If we compare the per capita consumption of fruit flavored yogurt and creamed or low fat cottage cheese it is evident that the addition of fruit to plain yogurt has increased the consumption of this product 8.5 times in the period from 1960 to 1975. There has been no increase in the per capita consumption of cottage cheese.

|  | Cottage Cheese Lbs. per Capita Consumption | Yogurt Lbs. per Capita Consumption |
|---|---|---|
| 1960 | 4.8 | 0.25 |
| 1975 | 4.8 | 2.13 |

Only 9% of the market prefers plain yogurt, but over 90% prefers the fruit flavored yogurt in the following order: strawberries, raspberries, blueberries, cherries and so on. I have worked on and off for the last 40 years on this problem of adding such fruits or fruit concentrates in various forms to cottage cheese, to enhance its acceptance by the public and increase the sale and consumption of this high protein food. Numerous other scientists in the dairy industry have worked on this problem and, until my invention, we had all failed.

One product which has been commercially marketed with fruit and cottage cheese has been a mixture of cottage cheese with small amounts of a fruit salad consisting of peaches, pineapples and cherries intermixed with the cottage cheese (Lucerne brand marketed by Safeway). This product has not had the success of conventional cottage cheese. Another product which was recently introduced is a "Cottage Cheese and Yogurt with Fruits" marketed by Zausner Foods Corporation. This product suffers from discoloration of fruit and osmotic effects which harden the curd, thus it has also not had the success of conventional cottage cheese. Other abortive attempts to make a cottage cheese-fruit combination were made by Bordens with their "Yo-cot" product and by Food Producers, Inc. with their "Fruitine" formula for cottage cheese. Neither of these products were successful.

The present invention has overcome the aforementioned problems associated with the prior art. It is well known that creamed cottage cheese typically has a pH of about 5.0. Anyone familiar with yogurt knows that a mixture of fruit with yogurt preferably has a final pH of about 4.2 for the optimum release of the fruit flavor in combination with the sugar and acid of the product. I have found that this also holds true for the combinations of sugared fruit and cottage cheese. Ideally the mixed cottage cheese and fruit should have a pH of from 4.3 to 4.6, most preferably from 4.4 to 4.5. This may be achieved by using a cream dressing for the cottage cheese which brings the pH of the creamed cottage cheese to a pH between 4.0 and 4.5 with an optimum of 4.2. In other words, for fruit flavored cottage cheese, a sour or cultured cream dressing must be used or substantial acidity must be added to the fruit

-4-

layer for optimum release of fruit flavor.

I have found that a cottage cheese curd cooked out to a Lundstedt Curd Meter reading of 6 or slightly above will absorb a sour cream dressing just as readily as a sweet cream dressing - pH 4.2 versus pH 5.0. A sour cream dressing using a plain buttermilk culture can be used with my invention, but such a dressing generally will not bring the pH down as low as a pH of 4.2. It is desirable to have a sour cream dressing acidified with high acid producing lactic acid bacteria. Preferably the dressing should include a high acid yogurt culture. The yogurt culture may be used as the sole creaming agent or it may be blended with sweet cream. If no acid is added to the fruit layer, then a yogurt culture which will bring the creamed cottage cheese down to a pH of from 4.0 to 4.5, preferrably to a pH of from 4.2 to 4.4 is desirable.

By way of example, for those versed in the art of cottage cheese and yogurt manufacture, the composition of a low fat-cottage cheese sundae can be as shown in Table 1:

## TABLE 1

lbs.

| | | |
|---|---|---|
| Cottage Cheese Curd . . . . . . . 50.0 ) | 83 lbs. cottage |
| High Acid Yogurt - 5% Fat . . . . 32.0 ) | cheese for top |
| Salt . . . . . . . . . . . . . . . 1.0 ) | of container |

Parts

| | | |
|---|---|---|
| Frozen Red Raspberries . . . . . 38.0 ) | |
| Cane sugar (sucrose). . . . . . . 45.0 ) | |
| Condensed red raspberry flavor . 2.5 ) | 17 lbs. |
| Apple pectin stabilizer . . . . . 0.5 ) | base layer |
| Water to make a preserve with ) | cooked fruit |
| soluble total solids, after ) | preserve |
| cooking, of between 50 and 51% as ) | |
| determined by a refractometer . . XX.X ) | |

100 lbs.

```
Per 100 grams:  Fat . . . . . . . .  1.6%
                Protein . . . . .  9.0%
                Carbohydrates . . 10.0%

                Calories  . . . . 90
```

As an example, my invention may be practiced by inserting a fruit filler ahead of a cottage cheese dispenser in an automated filling operation. A viscous fruit layer is prepared by mixing the components of the red raspberry base layer referred to above, cooking the mixture, cooling the cooked mixture to about 2°C, and (using the first automatic filler) dispensing the cooled mixture into the bottom of the cup. The second, regular automatic filler will gently overlay the base layer (while at about 2°C) until the cup is filled with creamed cottage cheese formulated as shown above. The cup is filled with cottage cheese sufficiently slowly to avoid mixing of the fruit with the cottage cheese. The cup is then sealed by placing a lid on the filled cup. A delicious product results. By keeping the sugared fruit preserve separate from the creamed cottage cheese, and by properly formulating the fruit preserve and cottage cheese, the incidence of graininess, whey separation and fading colors has been eliminated. A shelf life of greater than one month can be achieved with good quality control in the manufacture of the product. The mixing of fruit and cottage cheese is done by the consumer shortly prior to eating. The above example is repeated for fresh strawberries, frozen blueberries and frozen red cherries, each with a resulting delicious product, having no graininess and no adverse color changes.

With the above examples, the cottage cheese portion tends to flow with some difficulty in automatic filling machines and the curd is slightly harder than may be desired. As an alternative formulation which provides for smoother flow and a looser consistency, the following examples are followed, aiming at a finished product with 4.25% fat in the creamed cottage cheese:

First the fruit preserve consisted of:

Raspberries, strawberries, blueberries or cherries at a 40% level.

Condensed corresponding flavor at about a 2% level.

Low-methoxyl pectin at a 0.3% level.

Sugar and water to make a 50% refractometer reading.

Citric acid in an amount to adjust the pH to 3.1.

While citric acid is preferred, a less desirable alternative compatible acid may be used, such as phosphoric, lactic, adipic, tartaric, hexamic, fumaric or malic to achieve a pH reduction.

The fruit-base layer becomes a viscous fluid (4 Bostwick Units) and can easily be stirred into the creamed cottage cheese.

The yogurt is made by a mixture of milk and cream and contains 11.0% fat. It is processed and homogenized as an ordinary yogurt mix. The yogurt is divided into 2 equal parts. The first half is cooled to 40°F and the other is cooled to 86°F and inoculated with 1/4 percent yogurt culture by the Lundstedt low temperature, long time method which develops a pH of 4.1 - 4.0 in 14 to 16 hours at 86°F (Cultured Dairy Products Journal, February, 1970).

The sweet and the sour yogurt cream is mixed together in equal proportions. Three percent salt is dissolved in this mixture and the whole cooled down to 40°F. This mixed sweet yogurt dressing had a pH of 5.0 and a fat content of 10.7%. This yogurt mixture provided a controlled absorbtion by the curd.

The cottage cheese curd produced either by the direct-acid set method or by the culture method is cooked out at a pH of 4.5 to a consistency corresponding to a Lundstedt Curd Meter reading of 6±1 (U.S. Patent No. 2,791,903, issued May 14, 1957).

The combination of the finished products are as shown in Table 2:

-7-

TABLE 2

|  | pH | lbs. |  |
|---|---|---|---|
| Cottage Cheese Curd . . . . | 4.5 | 50.0 ) | 83 lbs. cottage |
| 50/50 Yogurt/cream . . . . | 5.0 | 32.0 ) | cheese for top |
| Salt . . . . . . . . . . . . . . |  | 1.0 ) | of container |
|  |  |  | pH 4.75 |

|  | Parts |  |
|---|---|---|
| Frozen Red Raspberries . . . . . | 38.0 ) |  |
| Cane sugar (sucrose). . . . . . . | 45.0 ) |  |
| Condensed red raspberry flavor . | 2.0 ) | 17 lbs. |
| Low-methoxyl pectin stabilizer . | 0.3 ) | base layer |
| Water to make a preserve with | ) | cooked fruit |
| soluble total solids, after | ) | preserve |
| cooking, of between 50 and 51% as | ) |  |
| determined by a refractometer . | XX.X ) |  |
| Citric acid to adjust pH to 3.1 . | Y.Y ) |  |

100 lbs.

The creamed cottage cheese has a fat content of 4.25% and after blending the fruit with the creamed cottage cheese the blended product has a pH of 4.4.

There are advantages of using a low-methoxyl pectin rather than a conventional high-methoxyl pectin. Such a low-methoxyl pectin is available from Hercules, Inc., Wilmington, Delaware. See "Newer Applications for Pectin", F.F.Nelson, Food Product Development, February, 1979, for further information on the use of low-methoxyl pectins in yogurt and other food products. As indicated in this article, useful low-methoxyl pectins have a degree of methoxylation of from 25 to 50%, with the preferred degree of methoxylation being about 40%. The resultant fruit-base layer made with the pectin is a non-gel layer, having the properties of a viscous liquid rather than of a solid.

The cottage cheese curd after 24 hours will absorb the cream dressing to make a dry, soft curd without any free cream and will stay soft for the duration of its sales period.

Preferably the amount of water used in formulating the base layer will achieve a total solids of between 40 and 52% as determined by a refractometer. This will give both the desired osmolarity for storage without osmotic damage to either the fruit or the cottage cheese. This will also give a desired sweetness. Preferably, the fruit is present in an amount from 35-40 parts, the sugar in an amount from 40-48 parts, the condensed fruit flavor in an amount from 0 to 5 parts and the pectin in an amount from .1 to 1 parts. The base layer of fruit preserve preferably has a viscosity of from 3 to 6 Bostwick units at about 2°C. The base layer should not be a non-flowing gel nor a thin runny liquid since it must be able to be readily mixed by the consumer and yet remain separate until mixed by the consumer just before eating

The cottage cheese used could, if desired, be made to have a higher fat content, such as a minimum of 4%, in the finished cottage cheese. Using an 11% fat yogurt dressing equal amounts of cottage cheese curd and yogurt dressing can be used. The yogurt is made without stabilizers and extra milk solids.

Either fresh fruits or frozen fruits may be used for formulating the base layer. It will be recognized by those skilled in the art of cottage cheese making, that the present process introduces a new type of a cottage cheese product on the market, namely a cottage cheese sundae where the fruit is layered on the bottom of the container and overlaid with creamed cottage cheese.

While there have been described above the principles of this invention in connection with a specific method and specific formulations, it is to be clearly understood that this description is made only by way of example and not as a limitation to the scope of the invention.

WHAT WE CLAIM IS:

1.  A cottage cheese product comprising:

    a) a closed, sealed container;

    b) a fruit-sugar-and-stabilizer-containing, viscous, cooked, fruit base layer in the lower portion of said container; said base layer including approximately

    | | | |
    |---|---|---|
    | (1) Fruit | 35-40 | Parts |
    | (2) Cane Sugar | 40-48 | Parts |
    | (3) Condensed Fruit Flavor | 0-5 | Parts |
    | (4) Pectin Stabilizer | .1-1 | parts |

    (5) Water sufficient to achieve total soluble solids of from 40 to 52% as determined by a refractometer; and

    c)  a cottage cheese-containing layer above the base layer.

2.  A product according to claim 1 wherein the cottage cheese has a pH of between 4.0 and 4.5 and preferably of about 4.2.

3.  A product according to claim 1 or 2 wherein the fruit in the base layer is selected from the group consisting of

    a) strawberries

    b) raspberries

    c) blueberries, and

    d) cherries.

4. A product according to claim 1 or 3 wherein the base layer has a viscosity of from 3 to 6 Bostwick units.

5. The combination of claim 1 or 4 wherein the total soluble solids of the base layer are 51 or 52% and wherein the cottage cheese has a pH of about 4.75.

6. A product according to claim 1 wherein the cottage cheese-containing layer contains about 60% curd.

7. A product according to claim 1 or 6 wherein the cottage cheese-containing layer contains yogurt for example wherein only about one-half of the creaming mixture of the cottage cheese-containing layer is obtained from sour yogurt.

8. A product according to claim 1 wherein the pH of the two layers when mixed is between 4.3 and 4.6 and preferably between 4.4 and 4.5.

9. A product according to claim 1 wherein the fruit base layer additionally includes a compatible acid for example citric, phosphori lactic, adipic, tartaric, hexamic, fumaric, or malic acid which may be added in an amount to achieve a pH of about 3.1 in the fruit base layer.

10. A product according to claim 1 wherein the curd in the cottage cheese-containing layer has a Lundstedt Curd Meter reading of about 6.

11. A product according to claim 1 or 10 wherein the pectin used is a low-methozyl pectin having a degree of methoxylation of from 25 to 50% and preferably having a degree of methoxylation of 40%.

12. A method of making a combined cottage cheese and fruit product comprising the steps of:-

a) mixing in approximately the amounts set forth:

|     |                        |             |
| --- | ---------------------- | ----------- |
| (1) | Fruit                  | 35-40 parts |
| (2) | Cane Sugar             | 40-48 parts |
| (3) | Condensed Fruit Flavor | 0-5  parts  |
| (4) | Pectin Stabilizer      | .1-1  parts |

(5) Water sufficient to achieve total soluble solids of from 40 to 52% as determined by a refractometer;

b) cooking the mixture;

c) cooling the cooked mixture to about $2^{o}C$;

d) placing the cooled mixture into the bottom of a container;

e) after said placing, adding cottage cheese to said container sufficiently slowly to avoid mixing of the fruit with the cottage cheese; and

f) sealing said container.

13. A method according to claim 12 wherein the cottage cheese used in said adding is made by cooking cottage cheese curd to a Lundstedt Curd Meter reading of about 6 and creaming the curd with a creaming mixture containing yogurt preferably made by mixing yogurt and sweet cream.

0018761

Application number

EP 80 30 1279

# EUROPEAN SEARCH REPORT

European Patent Office

| | DOCUMENTS CONSIDERED TO BE RELEVANT | | CLASSIFICATION OF THE APPLICATION (Int Cl ) |
|---|---|---|---|
| Category | Citation of document with indication, where appropriate, of relevant passages | Relevant to claim | |
| | FR - A - 2 180 014 (UNILEVER)<br>* Claims 1,8,9; page 2, lines 3-9; example 1 * | 1,3,12 | A 23 C 19/076//<br>A 23 L 1/04<br>A 23 L 1/212 |
| A | GB - A - 1 032 075 (H. STRINGER) | | |
| A | DE - A - 1 492 799 (MOLKEREI U. EISKREM FABRIK WIERLEMANN) | | |
| A | FR - A - 2 091 444 (UNILEVER) | | |
| A | FR - A - 2 197 528 (UNILEVER) | | |

TECHNICAL FIELDS SEARCHED (Int.Cl. ³)

A 23 C   19/076
         19/09
         19/097
          9/133
A 23 L    1/212
          1/04
          1/06
A 23 B    7/08

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 23-07-1980 | DESMEDT |

EPO Form 1503.1   06.78